# EUROPEAN PATENT APPLICATION

(11) **EP 4 057 038 A1**
(43) Date of publication of application: **14.09.2022**
(21) Application number: 22155383.7
(22) Date of filing: 07.02.2022
(51) Int. Cl.: G02B 6/42

(54) **METHOD TO COUPLE LIGHT USING INTEGRATED HEAT SPREADER**

(30) Priority: 11.03.2021 US 202117199335
(71) Applicant: INTEL Corporation, Santa Clara, CA 95054 (US)
(72) Inventor: PRATAP, Divya, Hillsboro, 97124 (US); LI, Xiaoqian, Chandler, 85248 (US); CHIU, Chia-Pin, Tempe, 85284 (US)
(74) Representative: HGF

(57) **Abstract**

Embodiments disclosed herein include photonics systems and packages (100). In an embodiment, a photonics package (100) comprises a package substrate (105) and a photonics die (110) overhanging an edge of the package substrate (105). In an embodiment, the photonics die (110) comprises a v-groove (112) for receiving an optical fiber. In an embodiment, the photonics package (100) further comprises an integrated heat spreader (IHS) over the photonics die (110). In an embodiment, the IHS comprises a foot (122), and a hole (123) through the foot (122) is aligned with the v-groove (112).

## Description

### TECHNICAL FIELD

Embodiments of the present disclosure relate to electronic packages, and more particularly to photonics packages with an integrated heat spreader (IHS) that is used to align the optical fiber with a v-groove on the photonics die.

### BACKGROUND

The microelectronic industry has begun using optical connections as a way to increase bandwidth and performance. On die optical connectors are typically assembled as standalone components. In package assembly process flows, fiber attach units (FAUs) require alignment accuracy with the photonics die v-grooves. Additionally, in the case of polarization maintaining (PM) fibers, connector assembly typically has a low yield and consumes a lot of assembly time due to orientation challenges.

PM based FAU connectors are pre-assembled with pigtails. They are integrated directly to the photonics die and rely on costly and specialized equipment for alignment accuracy. In some instances active alignment is necessary for the PM based FAU connectors. Additionally, FAU connectors require special materials in order to be solder reflow compatible.

### BRIEF DESCRIPTION OF THE DRAWINGS

Figure 1A is a pair of cross-sectional illustrations depicting a photonics package and a side view of the integrated heat spreader (IHS) with fiber alignment features, in accordance with an embodiment.
Figure 1B is a pair of cross-sectional illustrations depicting the photonics package and the IHS with optical fibers inserted into the v-grooves, in accordance with an embodiment.
Figure 2A is a cross-sectional illustration of the photonics package and a plan view of a portion of the IHS with a plate extending out from a foot of the IHS, in accordance with an embodiment.
Figure 2B is a cross-sectional illustration of the IHS showing a plate with fins for aligning the optical fibers, in accordance with an embodiment.
Figure 2C is a cross-sectional illustration of the IHS showing a plate with v-grooves for aligning the optical fibers, in accordance with an embodiment.
Figure 2D is a cross-sectional illustration of the IHS showing a plate for supporting the optical fibers, in accordance with an embodiment.
Figure 3A is a pair of cross-sectional illustrations of a photonics package and the IHS with the optical fibers secured in the v-grooves by an epoxy and a plate, in accordance with an embodiment.
Figure 3B is a cross-sectional illustration of the photonics package with a fiber attach unit (FAU) attached to the IHS, in accordance with an embodiment.
Figure 3C is a cross-sectional illustration of the IHS that shows ends of the optical fibers that are lenses, in accordance with an embodiment.
Figure 4A is a cross-sectional illustration of the photonics package with a notch in the IHS for securing a spring clip, in accordance with an embodiment.
Figure 4B is a cross-sectional illustration of a portion of the IHS and a connector connected to the IHS by the spring clip, in accordance with an embodiment.
Figure 5A is a cross-sectional illustration of the photonics package with a magnet attached to the IHS, in accordance with an embodiment.
Figure 5B is a plan view illustration of the photonics package and a connector attached to the IHS and secured by the magnet, in accordance with an embodiment.
Figure 6A is a cross-sectional illustration of a photonics package with an optical fiber that extends entirely through the hole in the IHS, in accordance with an embodiment.
Figure 6B is a cross-sectional illustration of the photonics package after excess length of the optical fiber is removed, in accordance with an embodiment.
Figure 7 is a cross-sectional illustration of a photonics system with an IHS that comprises fiber alignment features, in accordance with an embodiment.
Figure 8 is a schematic of a computing device built in accordance with an embodiment.

### EMBODIMENTS OF THE PRESENT DISCLOSURE

Described herein are photonics packages with an integrated heat spreader (IHS) that is used to align the optical fiber with a v-groove on the photonics die, in accordance with various embodiments. In the following description, various aspects of the illustrative implementations will be described using terms commonly employed by those skilled in the art to convey the substance of their work to others skilled in the art. However, it will be apparent to those skilled in the art that the present invention may be practiced with only some of the described aspects. For purposes of explanation, specific numbers, materials and configurations are set forth in order to provide a thorough understanding of the illustrative implementations. However, it will be apparent to one skilled in the art that the present invention may be practiced without the specific details. In other instances, well-known features are omitted or simplified in order not to obscure the illustrative implementations.

Various operations will be described as multiple discrete operations, in turn, in a manner that is most helpful in understanding the present invention, however, the order of description should not be construed to imply that these operations are necessarily order dependent. In particular, these operations need not be performed in the order of presentation.

As noted above, alignment of optical fibers to the v-grooves on the photonics die is a difficult and time consuming process. Accordingly, embodiments disclosed herein leverage existing features of the photonics package to provide alignment features that makes aligning the optical fibers simpler. Particularly, embodiments disclosed herein use the integrated heat spreader (IHS) as an alignment device. Holes in a foot of the IHS are made and aligned with the v-grooves on the photonics die. As such, optical fibers can be inserted through the holes and be passively aligned to the v-grooves on the photonics die. The foot of the IHS may also include alignment holes in order to properly align a connector to the optical fibers.

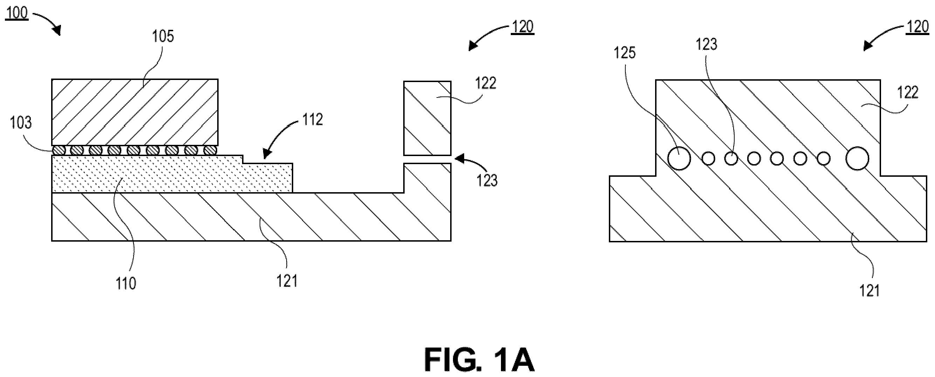

Referring now to Figure 1A a pair of cross-sectional illustrations of a photonics package 100 (left) and an IHS 120 (right) is shown, in accordance with an embodiment. In an embodiment, the photonics package comprises a package substrate 105. A photonics die 110 is attached to the package substrate 105 by interconnects 103, such as solder balls or the like. The photonics die 110 may be a die that is configured to convert an optical signal into an electrical signal and/or an electrical signal into an optical signal. The photonics die 110 may be electrically coupled to a processor die (not shown) that operates in the electrical regime. The processor die may be electrically coupled to the photonics die 110 by an embedded bridge (not shown) in the package substrate 105, or by any other high density routing architecture. In an embodiment, an edge of the photonics die 110 extends past an edge of the package substrate 105. The extension provides access to a v-groove 112 on the surface of the photonics die 110.

In an embodiment, an IHS 120 is attached to the photonics die 110. In the illustrated embodiment, the IHS 120 is directly attached to the photonics die 110, but it is to be appreciated that a thermal interface material (TIM) may be provided between the photonics die 110 and the IHS 120. In an embodiment, the IHS 120 comprises a lid portion 121 and a foot portion 122. The lid portion 121 is over the photonics die 110, and the foot portion 122 extends vertically away from the lid portion 121.

In an embodiment, the foot portion 122 may comprise holes 123. The holes 123 may be aligned with the v-grooves 112 on the photonics die 110. As such, optical fibers (not shown in Figure 1A) can be inserted into the holes 123 and directed to the v-grooves 112 in order to provide simple alignment of the optical fibers. As shown in the cross-sectional illustration of the IHS 120 on the right, the holes 123 may be provided between alignment holes 125. The alignment holes 125 may extend partially through a thickness of the foot portion 122, and be used to properly align a connector (not shown) to the photonics package 120. In an embodiment, a diameter of the alignment holes 125 may be larger than a diameter of the holes 123 for the optical fibers. In the illustrated embodiment six holes 123 are provided between the alignment holes 125. However, it is to be appreciated that the foot portion 122 may comprise any number of holes 123 in order to accommodate a desired number of optical fibers. It is to be appreciated that the fabrication of the holes 123 and the alignment holes 125 can be implemented with a high degree of accuracy. As such, after the IHS 120 is attached to the photonics die 110, the holes 123 are properly aligned with the v-grooves 112.

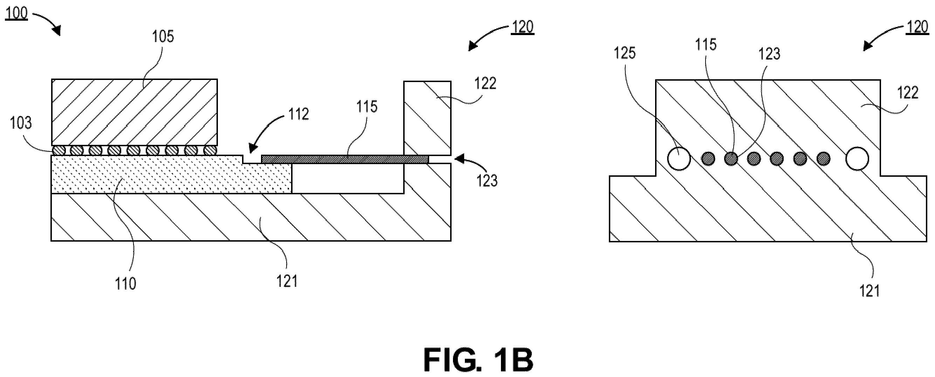

Referring now to Figure 1B, a pair of cross-sectional illustrations of the photonics package 100 and the IHS 120 after the insertion of optical fibers 115 is shown, in accordance with an embodiment. The optical fibers 115 may be any type of optical fiber. In a particular embodiment, the optical fibers 115 are polarization maintaining (PM) optical fibers 115. In an embodiment, the optical fibers 115 may be inserted through the holes 123 and extend towards the photonics die 110. The optical fibers 115 may rest in the v-grooves 112 on the photonics die 110. The optical fibers 115 may extend partially through the holes 123. That is, ends of the optical fibers may terminate within the foot portion 122 of the IHS 120. In an embodiment, the optical fibers 115 are inserted one by one with a manual assembly process, though an automated process may also be used to insert the optical fibers 115.

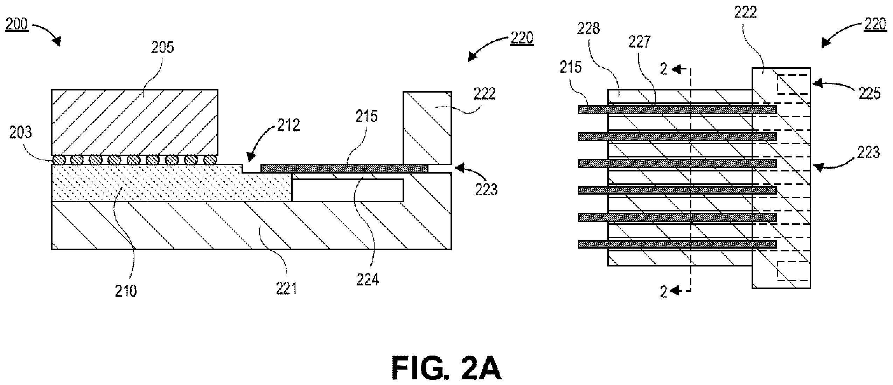

Referring now to Figure 2A, a cross-sectional illustration of a photonics package 200 (left) and a top view of a portion of the IHS 220 (right) are shown, in accordance with an embodiment. The photonics package 200 may comprise a package substrate 205 that is coupled to a photonics die 210 by interconnects 203. In an embodiment, an edge of the photonics die 210 extends past an edge of the package substrate 205 in order to expose the v-grooves 212 on the photonics die 210. An IHS 220 is attached to the photonics die 210. In an embodiment, the IHS 220 comprises a lid portion 221 and a foot portion 222. Holes 223 for optical fibers 215 may be provided through a thickness of the foot portion 222.

In an embodiment, the IHS 220 may further comprise a plate 227 that extend away from the foot portion 222. As shown in the top view of the IHS 220, the plate between fins 228 are each aligned with one of the holes 223 (indicated with dashed lines) that are between the alignment holes 225 (indicated with dashed lines). The plate 227 allows for the optical fibers 215 to slide along a surface and be supported from below before reaching the v-grooves 212 on the photonics die 210. As such, proper alignment of the optical fibers 215 is made even more simple and better alignment accuracy and control may be provided.

In the illustrated embodiment, the plate 227 extends from the foot portion 222 all the way to an edge of the photonics die 210. In other embodiments, the plate 227 may extend a portion of the distance between the foot portion 222 and the edge of the photonics die 210.

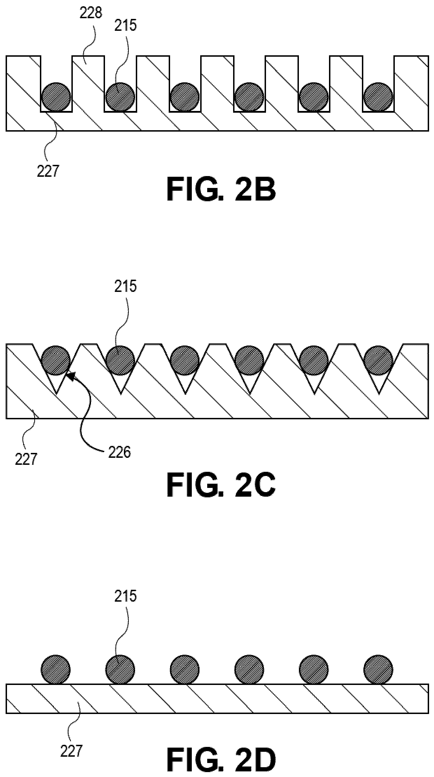

Referring now to Figure 2B, a cross-sectional illustration of the IHS 200 along line 2-2 in Figure 2A is shown, in order to more clearly illustrate the structure of the supportive plate 227. As shown, fins 228 extend up from the plate 227. The optical fibers 215 are set into the spaces between the fins 228. As such, the fins 228 help to maintain the alignment of the optical fibers 215 between the IHS foot portion 222 and the v-groove 212 of the photonics die 210.

Referring now to Figure 2C, an alternative cross-sectional illustration is provided, in accordance with an additional embodiment. Instead of being supported by a flat portion of the plate 227, the optical fibers 215 may be supported by a v-groove 226 in the plate 227. In an embodiment, the v-grooves 226 may be aligned with the holes 223 and the v-grooves 212 on the photonics die 210. The use of a v-groove may provide even more precise alignment of the optical fibers 215 between the foot portion 222 of the IHS 200 and the v-grooves 212 of the photonics die 210.

Referring now to Figure 2D, an alternative cross-sectional illustration is provided, in accordance with an additional embodiment. Instead of providing a structure to align the optical fibers 215 (e.g., fins 228 or v-grooves 226), the optical fibers 215 are supported directly on the plate 227. The plate 227 may be a flat structure that spans between the foot portion 222 and the v-grooves 212 of the photonics die 210. In such embodiments, adequate alignment is provided by the holes 223 and the v-grooves 212 on the photonics die 210.

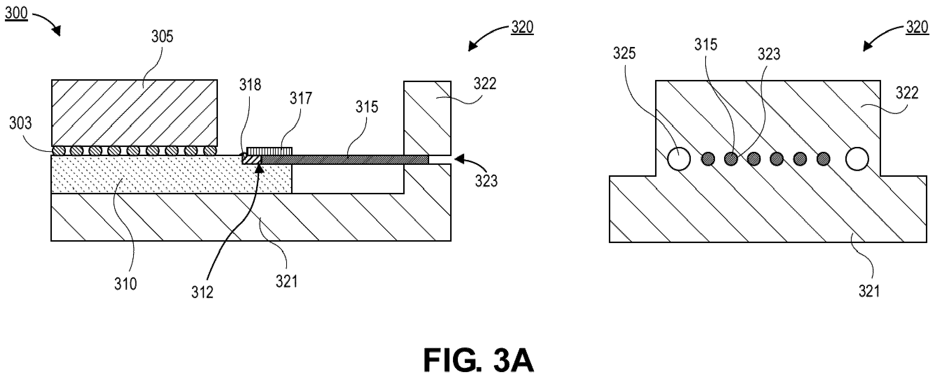

Referring now to Figure 3A, a pair of cross-sectional illustrations of a photonics package 300 (left) and a portion of the IHS 320 (right) is shown, in accordance with an embodiment. In an embodiment, the photonics package 300 comprises a package substrate 305 that is coupled to a photonics die 310 by interconnects 303. In an embodiment, an edge of the photonics die 310 extends past an edge of the package substrate 305 to expose the v-grooves 312. An IHS 320 is attached to the photonics die 310. The IHS 320 comprises a lid portion 321 and a foot portion 322.

In an embodiment, optical fibers 315 are inserted through holes 323 in the foot portion 322 of the IHS 320. The optical fibers 315 extend to the v-grooves 312. In an embodiment, the optical fibers 315 are secured into the v-grooves 312 by a plate 317 and an optical epoxy 318. As shown in Figure 3A, the optical fibers 315 extend partially through the holes 323. The plurality of holes 323 may be positioned between a pair of alignment holes 325 in the foot portion 322 of the IHS 320. The alignment holes 325 may be filled by pins of a connector (not shown in Figure 3A) in order to properly align the connector to the optical fibers 315.

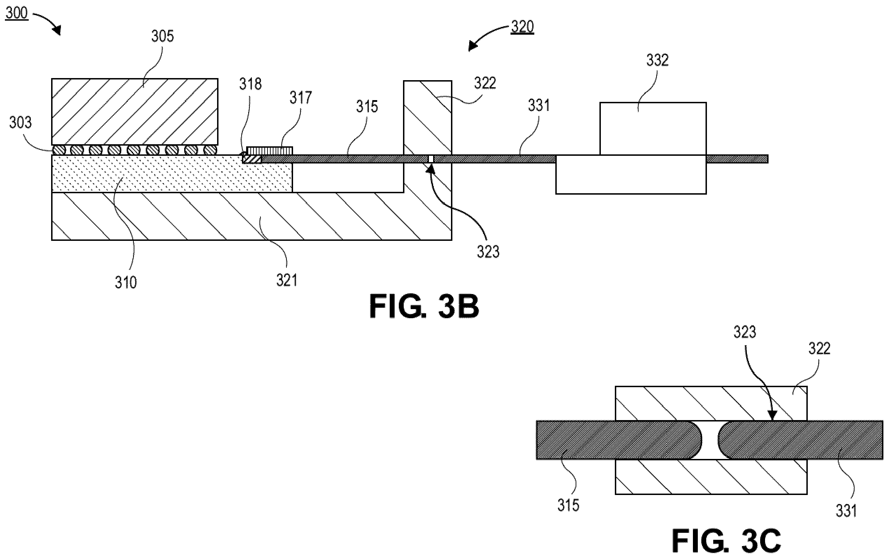

Referring now to Figure 3B, a cross-sectional illustration of a photonics package 300 with a fiber array unit (FAU) 332 is shown, in accordance with an embodiment. The FAU 332 may include optical fibers 331 that are extended into the holes 323. Accordingly, an end of the optical fiber 331 may face an end of the optical fiber 315 within the hole 323. A zoomed in illustration of the junction between the optical fiber 331 and the optical fiber 315 is shown in Figure 3C. As shown, ends of the optical fibers 315 and 331 may be formed into lenses in order to collimate the light in some embodiments. Collimating the light may improve the propagation efficiency between the two optical fibers 315 and 331. However, in other embodiments, the ends of the optical fibers 315 and 331 may be flat. That is, the ends of the optical fibers 315 and 331 may not have integrated lenses in some embodiments.

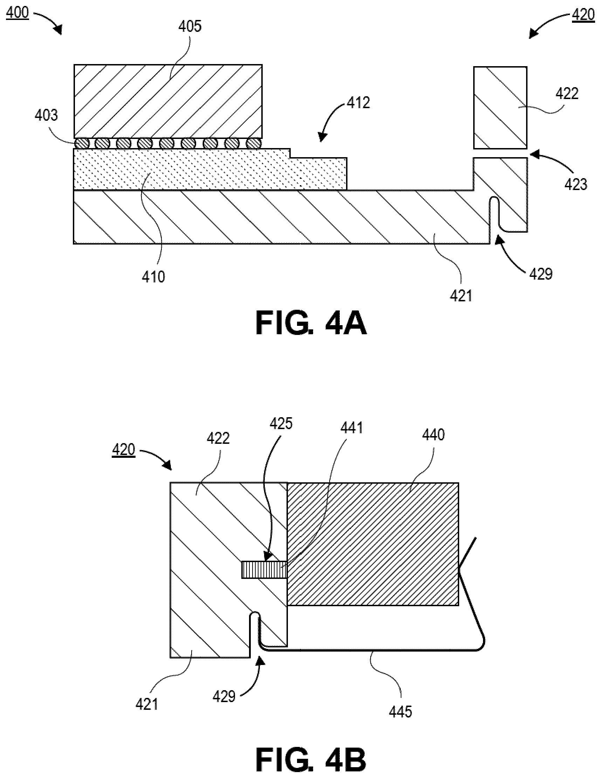

Referring now to Figure 4A, a cross-sectional illustration of a photonics package 400 is shown, in accordance with an additional embodiment. The embodiment shown in Figure 4A includes a notch 429 for securing a spring in order to mechanically couple a connector to the IHS 420.

In an embodiment, the photonics package 400 comprises a package substrate 405 that is coupled to a photonics die 410 by interconnects 403. In an embodiment, an edge of the photonics die 410 extends past an edge of the package substrate 405 in order to expose a v-groove 412 on the surface of the photonics die 410. An IHS 420 is attached to the photonics die 410. For example, the IHS 420 comprises a lid portion 421 and a foot portion 422. In an embodiment, holes 423 are provided through the foot portion 422. The holes 423 are aligned with the v-grooves 412 on the photonics die 410.

In an embodiment, the IHS 420 may further comprise a notch 429. The notch 429 may be formed into the lid portion 421 below the foot portion 422. The notch 429 may be oriented substantially orthogonal to the holes 423. That is, the holes 423 may extend through a width of the foot portion 422, and the notch 429 extends in a direction of a height of the foot portion 422. The notch 429 functions as an anchor point to which a spring clip (or any other clamping mechanism) may be attached to the IHS 420.

Referring now to Figure 4B, a cross-sectional illustration of a portion of the IHS 420 and a connector 440 that is attached to the IHS 420 is shown, in accordance with an embodiment. As shown, an alignment pin 441 of the connector 440 is inserted into an alignment hole 425 in the foot portion 422 of the IHS 420. The alignment pin 441 extends out from the connector 440. The connector 440 comprises optical fibers (out of the plane of Figure 4B) that are inserted into the holes 423 of the IHS 420.

As shown, a spring clip 445 secures the connector 440 against the foot portion 422 of the IHS 420. A first end of the spring clip 445 is inserted into the notch 429, and a second end of the spring clip 445 presses against a backside of the connector 440. As such, a compressive force (provided by the spring clip 445) secures the connector 440 against the IHS 420. In an embodiment, a single spring clip 445 is shown, however it is to be appreciated that more than one spring clip 445 may be used in some embodiments to provide an even larger force to secure the connector 440 to the IHS 420. Additionally, while an exemplary structure of the spring clip 445 is shown, it is to be appreciated that the spring clip 445 may have any structure that provides for a compressive force to secure the connector 440 to the IHS 420.

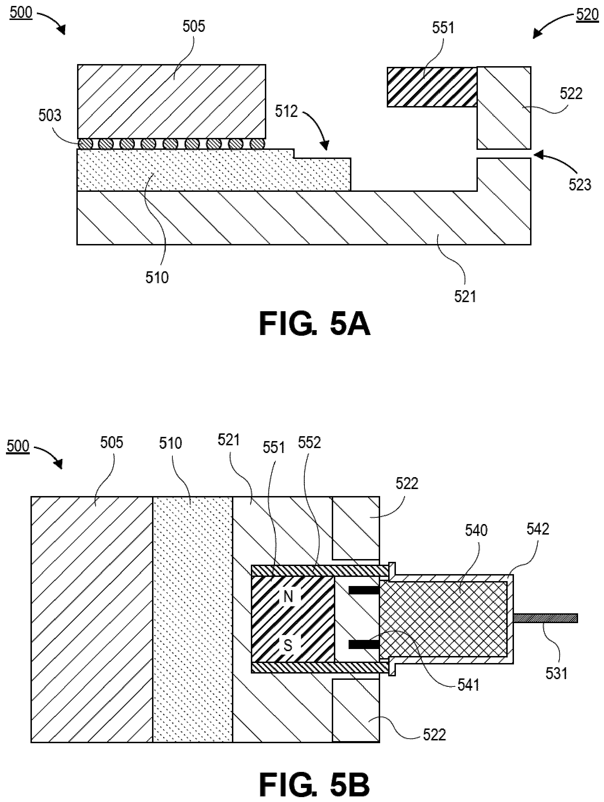

Referring now to Figure 5A, a cross-sectional illustration of a photonics package 500 is shown, in accordance with an additional embodiment. Instead of relying on a mechanical spring clip to secure the connector to the IHS 520, the illustrated embodiment provides a magnet 551 that provides a magnetic attractive force to secure the connector to the IHS 520.

As shown in Figure 5A, the photonics package 500 comprises a package substrate 505 that is coupled to a photonics die 510 by interconnects 503. In an embodiment, an edge of the photonics die 510 extends past an edge of the package substrate 505 in order to expose v-grooves 512. An IHS 520 is coupled to the photonics die 510. For example, a lid portion 521 is over the photonics die 510, and a foot portion 522 extends away from the lid portion 521. A series of holes 523 for accommodating optical fibers (not shown) is provided through a width of the foot portion 522. In an embodiment, a magnet 551 is attached to the foot portion 522. In some embodiments, the magnet 551 is attached to the foot portion 522 by magnetic force. When the IHS 520 is not made from a magnetic material, the magnet 551 may be mechanically coupled to the IHS 520.

Referring now to Figure 5B, a plan view illustration of the photonics package 500 and a connector 540 attached to the photonics package 500 is shown, in accordance with an embodiment. As shown, the magnet 551 may be secured to the foot portion by plates 552. For example, the plates 552 may be iron plates that are magnetized by the presence of the magnet 551. The magnet 551 may be oriented so that a north side (N) is adjacent to one of the plates 552 and the south side (S) is adjacent to the other one of the plates 552. That is the orientation of the magnet 551 may be such that the north side (N) and the south side (S) are the same distance vertically from the lid portion 521 of the IHS 520. In an embodiment, the plates 552 may pass through an entire width of the foot portion 522. Additionally, the plates 552 may extend past an outer surface of the foot portion 522 in some embodiments.

In an embodiment, the connector 540 may interface with alignment holes in the foot portion 522. For example, pins 541 extending away from the connector 540 fill the alignment holes. Optical fibers (not shown in Figure 5B) may be inserted into fiber holes 523 of the foot portion 522. An external optical fiber 531 may extend out from a surface of the connector 540 opposite from the IHS 520. In an embodiment, the optical connector 540 may comprise an external housing 542. The external housing 542 may be a material that interacts with the magnetic force applied by the magnet 551. For example, the external housing 542 may be iron or the like. The external housing 542 may directly contact the end surfaces of the plates 552. As such, a closed-loop magnetic line is formed around the foot portion 522 and the connector 540 in order to magnetically secure the connector 540 to the foot portion 522 of the IHS 520.

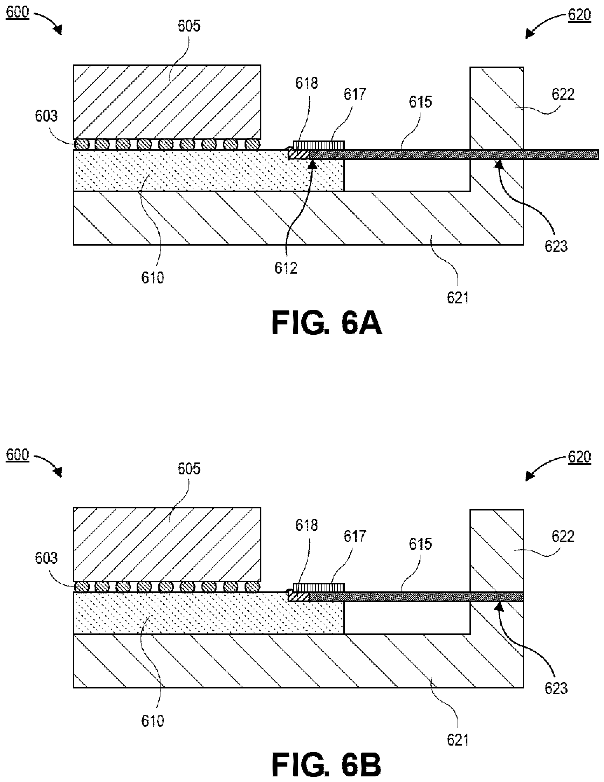

Referring now to Figure 6A, a cross-sectional illustration of a photonics package 600 is shown, in accordance with an additional embodiment. The photonics package 600 may comprise a package substrate 605 and a photonics die 610 coupled to the package substrate 605 by interconnects 603. An edge of the photonics die 610 extends past an edge of the package substrate 605 in order to expose the v-grooves 612 on the surface of the photonics die 610. In an embodiment, an IHS 620 is attached to the photonics die 610. The IHS 620 may comprise a lid portion 621 over the photonics die 610 and a foot portion 622 that extends away from the lid portion 621. Fiber holes 623 for receiving optical fibers 615 may be formed through a width of the foot portion 622. As shown, the fiber holes 623 are aligned with the v-grooves 612 in order to aid in the assembly of the photonics package 600.

In an embodiment, the optical fibers 615 may pass through the holes 623 and be coupled into the v-grooves 612. For example, a plate 617 may press down on the optical fibers 615, and an optical epoxy 618 may secure the optical fibers 615 in place. In contrast to the embodiments described above, the optical fibers 615 may pass entirely through the length of the holes 623 and extend out beyond an edge of the foot portion 622 of the IHS 620.

Referring now to Figure 6B, a cross-sectional illustration of the photonics package 600 after the excess length of the optical fibers 615 are removed is shown, in accordance with an embodiment. For example, the optical fibers 615 may be cleaved with a laser cleaving process. In an embodiment, ends of the optical fibers 615 may be substantially coplanar with an outer surface of the foot portion 622 of the IHS 620. A process such as the one illustrated in Figures 6A and 6B may enable better management of the fiber orientation, which is critical when utilizing PM optical fibers.

In existing processes, the number of PM optical fibers that are needed are cut from a fiber spool. Each of the PM optical fibers are individually oriented at assembly. As such, there is a larger possibility for error since each fiber may be oriented differently due to process variations. In contrast, embodiments disclosed herein may first orient the cable at the fiber spool level before the individual PM optical fibers are cut. The individually cut PM optical fibers are properly aligned and can be individually inserted into the v-grooves of the photonics die via the holes in the IHS, using any of the processes such as those described above. As such, improved control over angular orientation of the PM optical fiber is provided compared to existing processes.

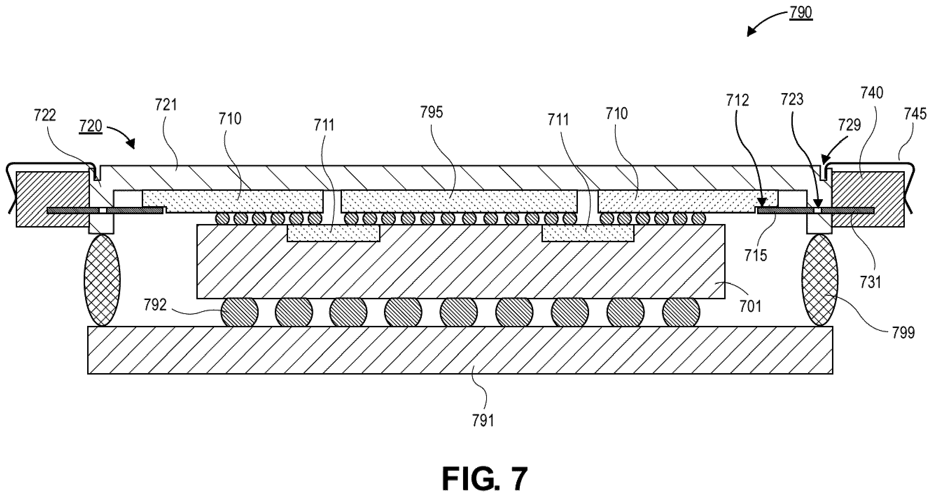

Referring now to Figure 7, a cross-sectional illustration of a photonics system 790 is shown, in accordance with an embodiment. In an embodiment, the photonics system 790 may comprise a board 791. For example, the board 791 may be a printed circuit board (PCB) or the like. In an embodiment, the board 791 may be electrically coupled to a package substrate 701 by interconnects 792. The interconnects 792 may be solder balls or the like. Alternatively, the board 791 may be coupled to the package substrate 701 by a socket architecture or any other interconnect architecture.

In an embodiment, the package substrate 701 may be a cored or coreless packaging substrate. For example, conductive routing (e.g., pads, traces, vias, etc.) may be provided in the package substrate in order to provide electrical routing to devices in the photonics system 790. In an embodiment, a processor die 795 may be coupled to the package substrate 701. The processor die 795 may be electrically coupled to one or more photonics die 710. For example, embedded bridge dies 711 may be embedded in the package substrate 701 in order to provide high density routing between the photonics dies 710 and the processor die 795.

In an embodiment, the photonics dies 710 may overhang an edge of the package substrate 701. The overhanging edge of the photonics dies 710 provides access to v-grooves 712 on the surface of the photonics dies 710. In an embodiment, an IHS 720 may be thermally coupled to the backside surfaces of the photonics dies 710 and the processor die 795. The IHS 720 may comprise a lid portion 721 and a foot portion 722. The foot portion 722 may extend vertically away from the lid portion 721 towards the board 791. In an embodiment, the foot portion 722 may not be supported from below. In other embodiments, the foot portion 722 may be supported from below by the board 791 or other portions of the photonics system 790.

In an embodiment, the IHS 720 comprises holes 723 that are aligned with the v-grooves 712 on the photonics dies 710. As such, optical fibers 715 may be inserted through the holes 723 in order to properly align with the v-grooves 712 in order to aid in assembly of the photonics system 790. In some embodiments, fingers (not shown in Figure 7) may also be provided between the holes 723 and the v-grooves 712, similar to the embodiments shown in Figure 2.

In an embodiment, a connector 740 may be coupled to the IHS 720 to provide external optical connections to the photonics dies 710. In an embodiment, the connector 740 may include external optical fibers 731 that are inserted into the holes 723. Alignment pins (out of the plane of Figure 7) may also be used to improve alignment of the connector 740. The ends of the optical fibers 715 and 731 may be lens shaped in order to improve optical transmission at the interface between the optical fibers 715 and the external optical fibers 731.

In an embodiment, the connector 740 may be secured to the IHS 720 using any of the architectures described in greater detail above. For example, the connector 740 may be secured by a spring clip or by a magnetic force. In the illustrated embodiment, the IHS 720 comprises a notch 729 to secure one end of a spring clip 745. The opposite end of the spring clip 745 provides a force against the outside surface of the connector 740 in order to secure the connector 740 to the IHS 720. In an embodiment, a sealant 799 may be provided between the IHS 720 and the board 791.

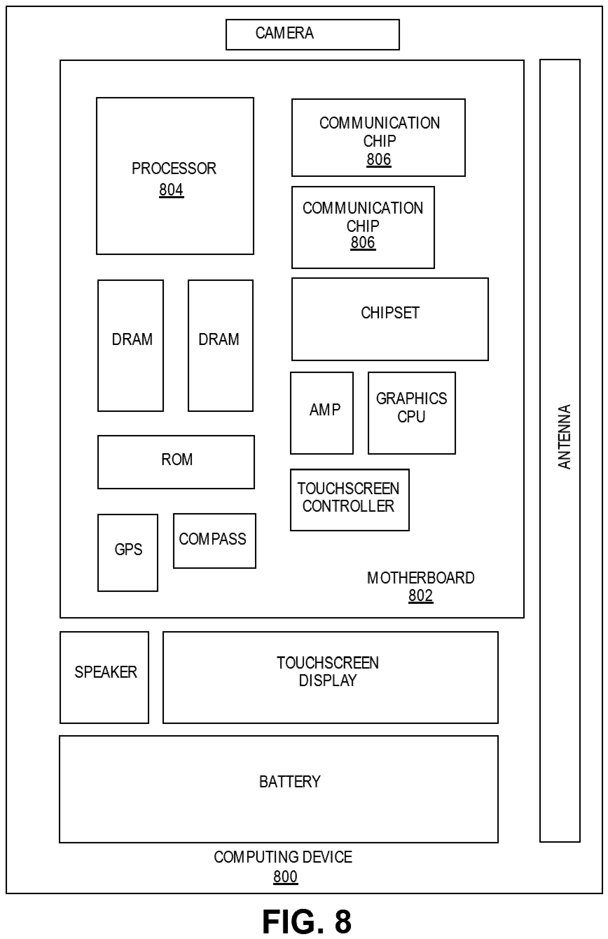

Figure 8 illustrates a computing device 800 in accordance with one implementation of the invention. The computing device 800 houses a board 802. The board 802 may include a number of components, including but not limited to a processor 804 and at least one communication chip 806. The processor 804 is physically and electrically coupled to the board 802. In some implementations the at least one communication chip 806 is also physically and electrically coupled to the board 802. In further implementations, the communication chip 806 is part of the processor 804.

These other components include, but are not limited to, volatile memory (e.g., DRAM), non-volatile memory (e.g., ROM), flash memory, a graphics processor, a digital signal processor, a crypto processor, a chipset, an antenna, a display, a touchscreen display, a touchscreen controller, a battery, an audio codec, a video codec, a power amplifier, a global positioning system (GPS) device, a compass, an accelerometer, a gyroscope, a speaker, a camera, and a mass storage device (such as hard disk drive, compact disk (CD), digital versatile disk (DVD), and so forth).

The communication chip 806 enables wireless communications for the transfer of data to and from the computing device 800. The term "wireless" and its derivatives may be used to describe circuits, devices, systems, methods, techniques, communications channels, etc., that may communicate data through the use of modulated electromagnetic radiation through a non-solid medium. The term does not imply that the associated devices do not contain any wires, although in some embodiments they might not. The communication chip 806 may implement any of a number of wireless standards or protocols, including but not limited to Wi-Fi (IEEE 802.11 family), WiMAX (IEEE 802.16 family), IEEE 802.20, long term evolution (LTE), Ev-DO, HSPA+, HSDPA+, HSUPA+, EDGE, GSM, GPRS, CDMA, TDMA, DECT, Bluetooth, derivatives thereof, as well as any other wireless protocols that are designated as 3G, 4G, 5G, and beyond. The computing device 800 may include a plurality of communication chips 806. For instance, a first communication chip 806 may be dedicated to shorter range wireless communications such as Wi-Fi and Bluetooth and a second communication chip 806 may be dedicated to longer range wireless communications such as GPS, EDGE, GPRS, CDMA, WiMAX, LTE, Ev-DO, and others.

The processor 804 of the computing device 800 includes an integrated circuit die packaged within the processor 804. In some implementations of the invention, the integrated circuit die of the processor may be part of a photonics system that comprises an IHS that includes fiber alignment features that are aligned with v-grooves on a photonics die, in accordance with embodiments described herein. The term "processor" may refer to any device or portion of a device that processes electronic data from registers and/or memory to transform that electronic data into other electronic data that may be stored in registers and/or memory.

The communication chip 806 also includes an integrated circuit die packaged within the communication chip 806. In accordance with another implementation of the invention, the integrated circuit die of the communication chip may be part of a photonics system that comprises an IHS that includes fiber alignment features that are aligned with v-grooves on a photonics die, in accordance with embodiments described herein.

The above description of illustrated implementations of the invention, including what is described in the Abstract, is not intended to be exhaustive or to limit the invention to the precise forms disclosed. While specific implementations of, and examples for, the invention are described herein for illustrative purposes, various equivalent modifications are possible within the scope of the invention, as those skilled in the relevant art will recognize.

These modifications may be made to the invention in light of the above detailed description. The terms used in the following claims should not be construed to limit the invention to the specific implementations disclosed in the specification and the claims. Rather, the scope of the invention is to be determined entirely by the following claims, which are to be construed in accordance with established doctrines of claim interpretation.

Example 1: a photonics package, comprising: a package substrate; a photonics die overhanging an edge of the package substrate, wherein the photonics die comprises a v-groove for receiving an optical fiber; and an integrated heat spreader (IHS) over the photonics die, wherein the IHS comprises a foot, and wherein a hole through the foot is aligned with the v-groove.

Example 2: the photonics package of Example 1, wherein the IHS further comprises a plate extending from the foot to the photonics die, wherein the plate is aligned with the hole and the v-groove.

Example 3: the photonics package of Example 2, wherein a second v-groove is provided along the plate.

Example 4: the photonics package of Examples 1-3, wherein the IHS further comprises alignment holes in the foot.

Example 5: the photonics package of Example 4, wherein the hole is between a pair of alignment holes.

Example 6: the photonics package of Examples 1-5, wherein the optical fiber sits in the v-groove and extends partially through the hole in the foot of the IHS.

Example 7: the photonics package of Example 6, wherein the optical fiber is secured to the v-groove with a top plate and an epoxy.

Example 8: the photonics package of Example 6 or Example 7, further comprising: a second optical fiber inserted into the hole.

Example 9: the photonics package of Example 8, wherein an end of the optical fiber facing the second optical fiber is a collimating lens, and wherein an end of the second optical fiber facing the optical fiber is a collimating lens.

Example 10: the photonics package of Examples 1-9, wherein the IHS further comprises: a notch for securing an end of a spring.

Example 11: the photonics package of Examples 1-10, further comprising: a magnet attached to the foot of the IHS.

Example 12: an integrated heat spreader (IHS), comprising: a lid; and a foot extending away from the lid, wherein the foot comprises: alignment holes, wherein the alignment holes pass into the foot; and optical fiber holes, wherein the optical fiber holes pass through an entire thickness of the foot.

Example 13: the IHS of Example 12, wherein a diameter of the optical fiber holes is smaller than a diameter of the alignment holes.

Example 14: the IHS of Example 12 or Example 13, wherein the optical fiber holes are between the alignment holes.

Example 15: the IHS of Examples 12-14, further comprising: a plate, wherein the plate is aligned with a bottom of the optical fiber holes.

Example 16: the IHS of Examples 12-15, further comprising: notch into a surface of the lid.

Example 17: the IHS of Example 16, wherein the notch is substantially orthogonal to the optical fiber holes.

Example 18: the IHS of Examples 12-17, further comprising: a magnet attached to the foot.

Example 19: the IHS of Example 18, further comprising: iron plates connected to the magnet and extending through the foot.

Example 20: the IHS of Example 18 or Example 19, wherein the magnet is oriented so that a north end of the magnet and a south end of the magnet are the same distance from the lid.

Example 21: the IHS of Examples 12-20, further comprising: a fiber connector coupled to the IHS, wherein the fiber connector comprises alignment pins that are inserted into the alignment holes.

Example 22: a photonics system, comprising: a board; a package substrate coupled to the board; a photonics die attached to the package substrate, wherein the photonics die comprises v-grooves; and an integrated heat spreader (IHS) over the photonics die, wherein the IHS comprises a foot, and wherein holes through the foot are aligned with the v-grooves.

Example 23: the photonics system of Example 22, further comprising: optical fibers passing through the holes through the foot and disposed into the v-grooves.

Example 24: the photonics system of Example 22 or Example 23, further comprising: alignment holes in the foot.

Example 25: the photonics system of Examples 22-24, wherein the IHS further comprises a plate extending from the foot to the photonics die, wherein the plate is aligned with the holes and the v-grooves.

## Claims

1. A photonics package, comprising:
a package substrate;
a photonics die overhanging an edge of the package substrate, wherein the photonics die comprises a v-groove for receiving an optical fiber; and
an integrated heat spreader (IHS) over the photonics die, wherein the IHS comprises a foot, and wherein a hole through the foot is aligned with the v-groove.

2. The photonics package of claim 1, wherein the IHS further comprises a plate extending from the foot to the photonics die, wherein the plate is aligned with the hole and the v-groove.

3. The photonics package of claim 2, wherein a second v-groove is provided along the plate.

4. The photonics package of claim 1, 2 or 3, wherein the IHS further comprises alignment holes in the foot.

5. The photonics package of claim 4, wherein the hole is between a pair of alignment holes.

6. The photonics package of claim 1, 2, 3, 4 or 5, wherein the optical fiber sits in the v-groove and extends partially through the hole in the foot of the IHS.

7. The photonics package of claim 6, wherein the optical fiber is secured to the v-groove with a top plate and an epoxy.

8. The photonics package of claim 6 or 7, further comprising:
a second optical fiber inserted into the hole.

9. The photonics package of claim 8, wherein an end of the optical fiber facing the second optical fiber is a collimating lens, and wherein an end of the second optical fiber facing the optical fiber is a collimating lens.

10. The photonics package of claim 1, 2, 3, 4, 5, 6, 7, 8 or 9, wherein the IHS further comprises:
a notch for securing an end of a spring.

11. The photonics package of claim 1, 2, 3, 4, 5, 6, 7, 8, 9 or 10, further comprising:
a magnet attached to the foot of the IHS.

12. A method of fabricating a photonics package, the method comprising:
providing a package substrate;
providing a photonics die overhanging an edge of the package substrate, wherein the photonics die comprises a v-groove for receiving an optical fiber; and
providing an integrated heat spreader (IHS) over the photonics die, wherein the IHS comprises a foot, and wherein a hole through the foot is aligned with the v-groove.

13. The method of claim 12, wherein the IHS further comprises a plate extending from the foot to the photonics die, wherein the plate is aligned with the hole and the v-groove.

14. The method of claim 13, wherein a second v-groove is provided along the plate.

15. The photonics package of claim 12, 13 or 14, wherein the IHS further comprises alignment holes in the foot.
